(19)

Europäisches
Patentamt
European
Patent Office
Office européen
des brevets

(11) **EP 2 129 935 B1**

(12) **EUROPÄISCHE PATENTSCHRIFT**

(45) Veröffentlichungstag und Bekanntmachung des
Hinweises auf die Patenterteilung:
**07.07.2010 Patentblatt 2010/27**

(21) Anmeldenummer: **08734590.6**

(22) Anmeldetag: **05.03.2008**

(51) Int Cl.:
**F16H 25/06** (2006.01)

(86) Internationale Anmeldenummer:
**PCT/EP2008/001733**

(87) Internationale Veröffentlichungsnummer:
**WO 2008/107168 (12.09.2008 Gazette 2008/37)**

(54) **KOAXIALGETRIEBE**

COAXIAL GEAR SET

TRANSMISSION COAXIALE

(84) Benannte Vertragsstaaten:
**AT BE BG CH CY CZ DE DK EE ES FI FR GB GR
HR HU IE IS IT LI LT LU LV MC MT NL NO PL PT
RO SE SI SK TR**

(30) Priorität: **06.03.2007 DE 102007011175**

(43) Veröffentlichungstag der Anmeldung:
**09.12.2009 Patentblatt 2009/50**

(73) Patentinhaber: **Wittenstein AG
97999 Igersheim (DE)**

(72) Erfinder: **SCHREIBER, Heiko
97990 Weikersheim (DE)**

(74) Vertreter: **Weiss, Peter et al
Dr. Weiss & Arat
Zeppelinstrasse 4
78234 Engen (DE)**

(56) Entgegenhaltungen:
**FR-A- 755 284       US-A- 2 048 688
US-A- 2 447 104       US-A1- 2005 066 769**

EP 2 129 935 B1

**Beschreibung**

Die vorliegende Erfindung betrifft ein Koaxialgetriebe, insbesondere Hohlwellengetriebe für die industrielle Antriebstechnik mit hoher Leistungsdichte, mit einem Antriebselement, einem Element und einem Abtriebselement, wobei eine Übersetzung sowie eine Übertragung eines Antriebsmomentes zwischen Antriebselement und Abtriebselement über eine Mehrzahl von radial bewegbaren Zahnsegmenten erfolgt.

**Stand der Technik**

Herkömmliche Getriebe sind in vielfältiger Form und Ausführung auf dem Markt bekannt und gebräuchlich. Im wesentlichen wird bei einem Koaxialgetriebe ein Zahnsegment über ein mit einer Kontur versehenes Antriebselement in eine Innenverzahnung eines Hohlrads bewegt, um eine Übersetzung herzustellen und ein Moment zu übertragen.
Dabei sind die herkömmlichen Symmetrien zwischen den Zahnflanken des Zahnsegments und der Zahngeometrie der Innenverzahnung eines Hohlrads derart gewählt, dass sich die Zahnflanken der Zahnsegmente gegenüber der Innenverzahnung eines Hohlrads linienartig berühren.
Nachteilig hieran ist, dass lediglich über die linienartige Berührung eine Übertragung von Kraft und Momenten erfolgt.
Durch diese abwälzende Linienberührung zwischen einer Zahnflankenkontur des Zahnsegments sowie einer Kontur einer Innenverzahnung des Hohlrads stellt sich eine hohe Belastung (Pressung) mit hohem Verschleiss insbesondere bei sehr hohen Kräften ein.
Das Dokument FR 755 284 wind als nächster Stand der Technik angeschen und offenbart die Merkmale des Oberbegriffs des Anspruchs 1.

**Aufgabe**

Der vorliegenden Erfindung liegt daher die Aufgabe zugrunde, ein Koaxialgetriebe zu schaffen, welches die genannten Nachteile beseitigt, mit welchem eine Übertragung von hohen Momenten von radial bewegbaren Zahnsegmenten gegenüber Innenverzahnungen von Hohlrädern bei reduziertem Verschleiss verbessert werden sollen.

**Lösung der Aufgabe**

Zur Lösung dieser Aufgabe führt, dass eine äussere Zahnflankenkontur der Zahnkontur der Zahnsegmente und/oder eine Flanken-Kontur einer Verzahnung einer Innenverzahnung eines Hohlrads, bezogen auf eine Getriebeachse, eine Zahnkontur aufweisen, die einen Flächenkontakt im Eingriffsbereich ermöglicht, welcher durch die Ausführung als logarithmische Spirale erreicht wird.
Bei der vorliegenden Erfindung hat sich als besonders vorteilhaft erwiesen, dass eine äussere Kontur eines Zahnsegments, insbesondere im Bereich der Zahnflanken, der Kontur einer logarithmischen Spirale folgt. Die logarithmische Spirale bezeichnet eine Kurve, die alle vom Ursprung ausgehenden Strahlen unter dem gleichen Winkel $\alpha$ schneidet. Ihr Verlauf wird durch die Formel

$$r = e^{a\alpha}$$

$$\text{mit: } \tan \alpha = 1/a$$

bestimmt.
Genau dieselbe Kontur wird auch als Kontur einer Verzahnung, insbesondere einer Innenverzahnung des Hohlrads, gewählt.
Dabei stellt sich im Eingriffbereich beider Zahnflanken des Zahnsegments mit der Verzahnung des Hohlrads ein vollflächiger Kontakt zwischen einer Zahnflankenkontur des Zahnsegments und der Zahnflanken-Kontur der Verzahnung ein.
Durch die Geometrie der logarithmischen Spirale mit vollflächiger Berührung beim radialen Bewegen des Zahnsegments in die Innenverzahnung des Hohlrads wird eine optimale Lastverteilung (Pressungsverteilung) gewährleistet, sodass eine optimale Übertragung von hohen Momenten bei geringstmöglichem, insbesondere gleichmässigem Verschleiss möglich ist.

Hierdurch lässt sich die Lebensdauer eines derartigen Koaxialgetriebes wesentlich erhöhen, wobei gleichzeitig sehr hohe Momente übertragen werden können. Ein Flächenkontakt unabhängig vom Radius und Grösse des Getriebes wird hierdurch gewährleistet.

Dabei kann ein Winkel $\alpha$ zwischen 5° und 85° bevorzugt zwischen 15° und 45° durch die entsprechende Funktion der logarithmischen Spirale frei gewählt werden, so dass auch Einfluss genommen werden kann auf unterschiedliche Zahnflankengeometrien der Innenverzahnung sowie der Zahnsegmente. Unabhängig vom Radius lassen sich dann bei der Wahl einer bestimmten logarithmischen Spirale entsprechend unterschiedlich grosse Koaxialgetriebe herstellen mit unterschiedlichen Durchmessern, in welchen ein- und dasselbe Zahnsegment verwendet werden kann. Dies ist ebenfalls ein grosser Vorteil, da ein- und dasselbe Zahnsegment für unterschiedlich gross dimensionierte Koaxialgetriebe verwendet werden kann.

Durch die Anpassung einer entsprechend gekrümmten Hohlradfussausrundung an die Kopfkrümmung des Zahnsegments lässt sich Einfluss nehmen auf ein stossfreies zwangsgeführtes Zurückschieben des Zahnsegments, wenn dieses den Zahnfuss der Innenverzahnung des Hohlrads durchläuft. Hierdurch wird ein stossfreier Übergang zwischen einer Auf- und Abbewegung der Zahnsegmente geschaffen.

## Figurenbeschreibung

Weitere Vorteile, Merkmale und Einzelheiten der Erfindung ergeben sich aus der nachfolgenden Beschreibung bevorzugter Ausführungsbeispiele sowie anhand der Zeichnung; diese zeigt

Figur 1 einen schematisch dargestellten Querschnitt durch ein Koaxialgetriebe;

Figur 2 eine schematisch dargestellte Draufsicht auf eine Ausbildung einer Kontur einer Zahnflanke oder einer Kontur einer Innenverzahnung eines Hohlrads;

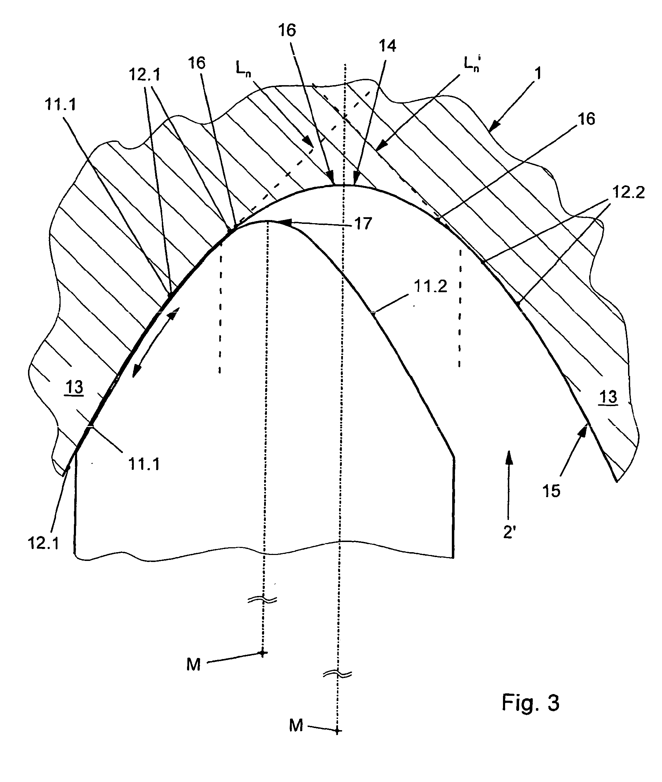

Figur 3 einen schematisch dargestellten vergrösserten Ausschnitt im Bereich zwischen Kontur der Innenverzahnung des Hohlrads sowie eines Zahnsegments.

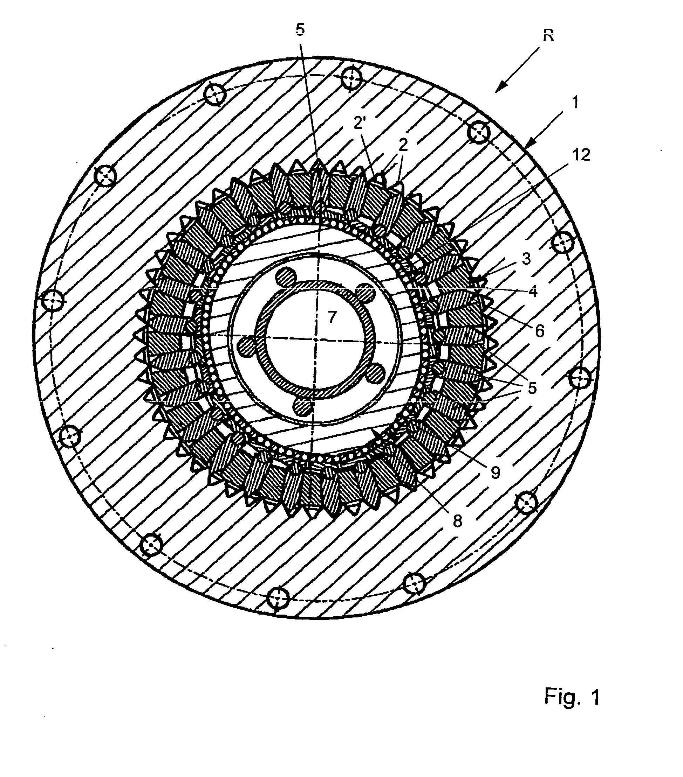

Gemäss Figur 1 weist ein Koaxialgetriebe R ein Hohlrad 1 auf, welches eine innenliegende Verzahnung 2 besitzt. Innerhalb des Hohlrads 1 ist ein Element 3, bevorzugt ausgebildet als Abtriebselement, kreisringartig eingesetzt, wobei im kreisringartigen Element 3 eine Mehrzahl von radial nebeneinander und in entsprechende Führungen 4 eingesetzte Zahnsegmente 5 angeordnet ist. Die Zahnsegmente 5 sind innerhalb der Führung 4 radial hin und her verschiebbar gelagert und weisen einends eine Zahnkontur 6 bzw. Zahnflankenkontur auf.

Innerhalb des Elements 3 mit aufgenommenen Zahnsegmenten 5 ist ein Antriebselement 7 ausgebildet als Welle oder als Hohlwelle vorgesehen, das eine äussere Profilierung 8 aufweist, die bspw. mit einer Kontur 9 als Erhöhung polygon- oder noppenartig ausgebildet sein kann.

Ebenfalls ist zwischen der äusseren Kontur 9 der Profilierung 8 des Antriebselements 7 und dem Element 3, insbesondere dem Abtriebselement, bzw. einends der Zahnsegmente 5 eine Lagerung vorgesehen, die hier nicht näher dargestellt ist. Als Lagerung können Walzlager, Gleitlager od.dgl. eingesetzt sein, welche die äussere Kontur 9 der Profilierung 8 des Antriebselements 7 umschliessen.

Zur Funktionsweise des oben beschriebenen Koaxialgetriebes wird auf die Deutsche Patentanmeldung DE 10 2006 042 786 verwiesen

Die vorliegende Erfindung betrifft eine Weiterentwicklung des o.g. Koaxialgetriebes.

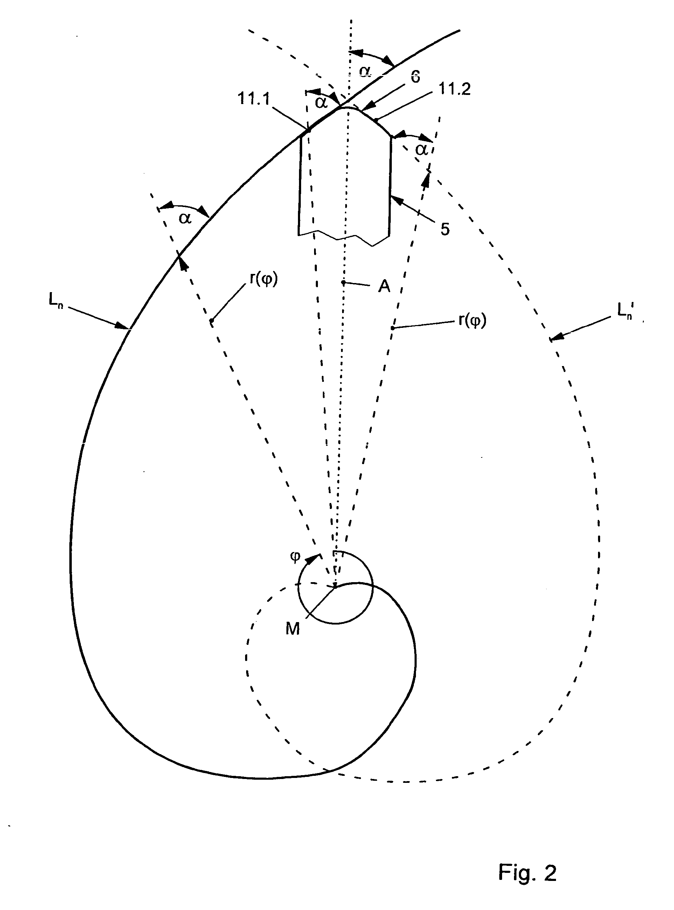

Gemäss Figur 2 ist eine schematische Darstellung einer logarithmischen Spirale Ln aufgezeigt, die von einer Getriebeachse M eines Koaxialgetriebes R entspringt. Die logarithmische Spirale Ln kann mit beliebigem Anstiegswinkel $\alpha$ gewählt werden.

Bei der vorliegenden Erfindung hat sich als besonders vorteilhaft erwiesen, eine äussere Zahnflankenkontur 11.1, 11.2 der Zahnsegmente 5 sowie eine innere Zahnflankenkontur 12.1 und 12.2 der Innenverzahnung (15) an die Kontur bzw. den Verlauf der logarithmischen Spirale Ln in Abhängigkeit eines konstanten Anstiegswinkel $\alpha$ anzupassen. Dabei sind beide Zahnflankenkonturen 11.1, 11.2, bzw. 12.1 und 12.2 spiegelsymmetrisch zu einer Achsmitte A.

Unabhängig vom gewählten Radius r schneidet jeder Strahl, ausgehend von der Getriebeachse M des Koaxialgetriebes R, die Zahnflankenkontur 11.1 oder 11.2 bzw. 12.1 oder 12.2 in einem gleichen Winkel $\alpha$. Der Winkel $\alpha$ ist frei wählbar bzw. durch die Funktion der gewählten logarithmischen Spirale Ln definiert.

Werden die Zahnsegmente 5 mit ihren Zahnflanken 11.1 bzw. 11.2 gegenüber den Zahnflanken 12.1 bzw. 12.2 der Innenverzahnung 15 entlang der logarithmischen Spirale Ln verschoben, liegen sich stets Flankenbereiche gleichen Anstiegswinkels $\alpha$ gegenüber. Somit liegt stets der optimale Zahnflächenkontakt vor. Geringste Krümmungsunterschiede im Bereich der Zahnflanke werden bei entsprechend verschobenen Zahnflanken der Zahnsegmente 8 zur Innenverzahnung 15 bereits bei geringsten Kräften elastisch ausgeglichen. Daher kann im kompletten Eingriffsgebiet von einem Flächenkontakt gesprochen werden.

Dies bedeutet, dass kein linienartiges Abwälzen, sondern ein flächiges Verschieben zwischen Zahnsegment 5 und Innenverzahnung 15 des Hohlrads 1 erfolgt, was eine sehr hohe Momentübertragung bei geringstmöglichem Verschleiss gewährleistet.

Ferner hat sich als vorteilhaft bei der vorliegenden Erfindung erwiesen, dass zwischen zwei benachbarten Verzahnungen 13 im Bereich des Zahnfusses 14 der Hohlradinnenverzahnung 15 eine Hohlradfussausrundung 16 gebildet ist, die sich mit einer Kontur tangential an die Kontur 12.1, 12.2 der Verzahnung 13 bzw. der Innenverzahnung 15 anpasst.

Dabei ist die Krümmung geringer als eine Kopfkrümmung 17 des Zahnsegments 5. Die Kopfkrümmung 17 des Zahnsegments 5 ist ebenfalls tangential übergehend an die Zahnflankenkonturen 11.1, 11.2 der Zahnflanken 6 angepasst. Hierdurch wird ein stossfreier Übergang zwischen der einzelnen Auf- und Abbewegung der Zahnsegmente 5 gewährleistet.

Wichtig ist jedoch bei der vorliegenden Erfindung, dass zur Übertragung der grösstmöglichen Kräfte und Momente, insbesondere im Bereich einer Verzahnung 13 des Hohlrads 1, eine möglichst grossflächige und permanente Berührung zwischen einer Zahnflanke 12.1 bzw. 12.2 der Hohlradinnenverzahnung 15 und einer Zahnflanke 11.1 bzw. 11.2 des Zahnsegments 5 bis nahezu an die Hohlradfussausrundung 16 hergestellt ist.

Zudem kann aufgrund der stossfreien Hubbewegung der Zahnsegmente 5 eine Zwangsrückführung des Zahnsegments 5 bei einer derartigen Gestaltung der Zahnflankenkontur 11.1, 11.2 bzw. Kontur 12.1, 12.2 der Innenverzahnung 15 des Hohlrads 1 entfallen, und das Zurückschieben der Zahnsegmente 5 durch die Gestaltung der Zahnflankenkontur erfolgt von selbst.

**Bezugszeichenliste**

| | | | | | |
|---|---|---|---|---|---|
| 1 | Hohlrad | 34 | | 67 | |
| 2 | Verzahnung | 35 | | 68 | |
| 2' | Zahnlücke | | | | |
| 3 | Element | 36 | | 69 | |
| 4 | Führung | 37 | | 70 | |
| 5 | Zahnsegment | 38 | | 71 | |
| 6 | Zahnkontur | 39 | | 72 | |
| 7 | Antriebselement | 40 | | 73 | |
| 8 | Profilierung | 41 | | 74 | |
| 9 | Kontur | 42 | | 75 | |
| 10 | | 43 | | 76 | |
| 11 | Zahnflankenkontur | 44 | | 77 | |
| 12 | Kontur | 45 | | 78 | |
| 13 | Verzahnung | 46 | | 79 | |
| 14 | Zahnfuss | 47 | | R | Koaxialgetriebe |
| 15 | Innenverzahnung | 48 | | | |
| 16 | Hohlradfussausrundung | 49 | | | |
| 17 | Kopfkrümmung | 50 | | Ln | Logarithmische Spirale |
| 18 | | 51 | | Ln' | Ln gespiegelt an A |
| 19 | | 52 | | M | Getriebeachse |
| 20 | | 53 | | | |
| 21 | | 54 | | A | Achsmitte |

(fortgesetzt)

| 22 | | 55 | | | |
|----|--|----|--|---|--|
| 23 | | 56 | | | |
| 24 | | 57 | | | |
| 25 | | 58 | | r | Radius |
| 26 | | 59 | | | |
| 27 | | 60 | | | |
| 28 | | 61 | | $\alpha$ | Winkel |
| 29 | | 62 | | | |
| 30 | | 63 | | $\varphi$ | Spiralwinkel |
| 31 | | 64 | | | |
| 32 | | 65 | | | |
| 33 | | 66 | | | |

## Patentansprüche

1. Koaxialgetriebe, insbesondere Hohlwellengetriebe für die industrielle Antriebstechnik mit hoher Leistungsdichte, mit einem Antriebselement (7), einem Element (3) und einem Abtriebselement, wobei eine Übersetzung sowie eine Übertragung eines Antriebsmoments zwischen Antriebselement (7) und Abtriebselement über eine Mehrzahl von radialen bewegbaren Zahnsegmenten (5) erfolgt,
**dadurch gekennzeichnet,**
**dass** eine äussere Zahnflankenkontur (11.1, 11.2) der Zahnkontur (6) der Zahnsegmente (5) und/oder eine Flanken-Kontur (12.1, 12.2) einer Verzahnung (13) einer Innenverzahnung (15) eines Hohlrads (1), bezogen auf eine Getriebeachse (M), eine Zahnkontur aufweisen, die einen Flächenkontakt im Eingriffsbereich ermöglicht, welcher durch die Ausführung als logarithmische Spirale erreicht wird.

2. Koaxialgetriebe nach Anspruch 1, **dadurch gekennzeichnet, dass** die äussere Zahnflankenkontur (11.1, 11.2) des Flankenbereichs des Zahnsegments (5) und die äussere Kontur (12.1, 12.2) der Innenverzahnung (15) der Verzahnung (13) des Hohlrads (1) unabhängig vom gewählten Radius zur Getriebeachse (M) einer gemeinsamen logarithmischen Spirale (Ln) mit wählbarem Anstiegswinkel ($\alpha$) entsprechen.

3. Koaxialgetriebe nach Anspruch 1 oder 2, **dadurch gekennzeichnet, dass** bei der Hubbewegung der Zahnsegmente kein Auseinanderklaffen der Zahnflanken (6) sowie eine gleichmässige Lastverteilung erfolgt, da die Zähne entlang der logarithmischen Spirale (Ln) verschoben werden und die miteinander in Kontakt stehenden Zahnflanken (6) der Zahnsegmente (5) und der Hohlradinnenverzahnung (15) stets denselben Anstiegswinkel ($\alpha$) besitzen.

4. Koaxialgetriebe nach Anspruch 1, **dadurch gekennzeichnet, dass** der Winkel ($\alpha$) zwischen 5° und 85°, insbesondere zwischen 15° und 45° wählbar ist.

5. Koaxialgetriebe nach wenigstens einem der Ansprüche 1 bis 4, **dadurch gekennzeichnet, dass** die äussere Zahnflankenkontur (11.1 bzw. 12.1) einerseits der Achsmitte (A) symmetrisch der benachbarten Kontur (11.2 bzw. 12.2) der Zahnflanke (6) bzw. der Innenverzahnung (15) des Hohlrads (1) ausgebildet ist.

6. Koaxialgetriebe nach wenigstens einem der Ansprüche 1 bis 5, **dadurch gekennzeichnet, dass** das Zahnsegment (5) eine Kopfkrümmung (17) aufweist.

7. Koaxialgetriebe nach Anspruch 6, **dadurch gekennzeichnet, dass** die Kopfkrümmung (17) des Zahnsegments (5) tangential an der Zahnflanke (6) anliegt und in deren Zahnflankenkontur (11.1, 11.2) übergeht.

8. Koaxialgetriebe nach wenigstens einem der Ansprüche 1 bis 7, **dadurch gekennzeichnet, dass** eine Hohlradfussausrundung (16) zwischen den jeweils seitlichen Konturen (12.1, 12.2) der Innenverzahnung (15) des Hohlrads (1) vorgesehen ist, wobei die Hohlradfussausrundung (16) geringer gekrümmt ist, als eine Kopfkrümmung (17) des Zahnsegments (5).

9. Koaxialgetriebe nach wenigstens einem der Ansprüche 1 bis 7, **dadurch gekennzeichnet, dass** aufgrund der Hohlradausrundung (16) der Innenverzahnung (15) in Kontakt mit der Kopfkrümmung (17) des Zahnsegments (5) eine stossfreie Hubbewegung und ein automatisches Zurückschieben der Zahnsegmente (5) aus der Innenverzahnung (15) ermöglicht wird.

10. Koaxialgetriebe nach wenigstens einem der Ansprüche 1 bis 9, **dadurch gekennzeichnet, dass** eine Anpassung der Zahnflankenkontur (11.1, 11.2) des Zahnsegments (5) aussen an die Kontur (12.1, 12.2) der Innenverzahnung (15) des Hohlrads (1) gemäss einer wählbaren logarithmischen Spirale (Ln) während des Eingreifens der Zahnflanke (6) in einen Zahnfuss (14) bzw. in eine Zahnflankenkontur (12.1, 12.2) der Innenverzahnung (15) des Hohlrads (1) erfolgt und eine Flächenberührung zwischen Zahnflankenkontur (11.1, 11.2) des Zahnsegments (5) und der Zahnflanke (6) der Verzahnung (13) des Hohlrads (1) gewährleistet ist.

11. Koaxialgetriebe nach wenigstens einem der Ansprüche 2 bis 10, **dadurch gekennzeichnet, dass** die Zahnflankenkontur (11) der Zahnsegmente (5) und/oder die Flankenkontur (12) der Innenverzahnung (15) entsprechend dem Verkippungsverhalten des Zahnsegments (5) unter Belastung korrigiert ist und von der logarithmischen Spirale leicht abweichen kann.

**Claims**

1. Coaxial gearing, in particular hollow shaft gearing for industrial drive technology, with high power density, having a drive element (7), an element (3) and an output element, a step-up/down and also a transfer of a drive torque occurring between the drive element (7) and the output element via a plurality of radial movable tooth segments (5), **characterised**
**in that** an outer tooth flank contour (11.1, 11.2) of the tooth contour (6) of the tooth segments (5) and/or a flank contour (12.1, 12.2) of a toothing (13) of an internal toothing (15) of an internal gear (1) have/has, in relation to a gearing axis (M), a tooth contour which makes surface contact possible in the engagement region, the surface contact being achieved by the design as a logarithmic spiral.

2. Coaxial gearing according to Claim 1, **characterised in that**, irrespective of the selected radius with respect to the gearing axis (M), the outer tooth flank contour (11.1, 11.2) of the flank region of the tooth segment (5) and the outer contour (12.1, 12.2) of the internal toothing (15) of the toothing (13) of the internal gear (1) correspond to a common logarithmic spiral (Ln) with selectable slope angle ($\alpha$).

3. Coaxial gearing according to Claim 1 or 2, **characterised in that**, during the stroke movement of the tooth segments, the tooth flanks (6) do not gape apart and there is a uniform load distribution, as the teeth are displaced along the logarithmic spiral (Ln) and those tooth flanks (6) of the tooth segments (5) and the internal gear internal toothing (15) which are in contact with one another always have the same slope angle ($\alpha$),

4. Coaxial gearing according to Claim 1, **characterised in that** the angle ($\alpha$) is selectable between 5° and 85°, in particular between 15° and 45°.

5. Coaxial gearing according to at least one of Claims 1 to 4, **characterised in that** the outer tooth flank contour (11.1 and 12.1) on one side of the centre line (A) is configured to be symmetrical to the adjacent contour (11.2 and 12.2) of the tooth flank (6) and the internal toothing (15) of the internal gear (1), respectively.

6. Coaxial gearing according to at least one of Claims 1 to 5, **characterised in that** the tooth segment (5) has a tip curve (17).

7. Coaxial gearing according to Claim 6, **characterised in that** the tip curve (17) of the tooth segment (5) tangentially adjoins the tooth flank (6) and merges into the tooth flank contour (11.1, 11.2) thereof.

8. Coaxial gearing according to at least one of Claims 1 to 7, **characterised in that** an internal gear root fillet (16) is provided between the respective lateral contours (12.1, 12.2) of the internal toothing (15) of the internal gear (1), the internal gear root fillet (16) being less curved than a tip curve (17) of the tooth segment (5),

9. Coaxial gearing according to at least one of Claims 1 to 7, **characterised in that** a jolt-free stroke movement and automatic pushing back of the tooth segments (5) out of the internal toothing (15) is made possible owing to the internal gear fillet (16) of the internal toothing (15) in contact with the tip curve (17) of the tooth segment (5).

10. Coaxial gearing according to at least one of Claims 1 to 9, **characterised in that** the tooth flank contour (11.1, 11.2) of the tooth segment (5) is adapted on the outside to the contour (12.1, 12.2) of the internal toothing (15) of the internal gear (1) in accordance with a selectable logarithmic spiral (Ln) during the engagement of the tooth flank (6) into a tooth root (14) or into a tooth flank contour (12.1, 12.2) of the internal toothing (15) of the internal gear (1), and surface contact is ensured between the tooth flank contour (11.1, 11.2) of the tooth segment (5) and the tooth flank (6) of the toothing (13) of the internal gear (1).

11. Coaxial gearing according to at least one of Claims 2 to 10, **characterised in that** the tooth flank contour (11) of the tooth segments (5) and/or the flank contour (12) of the internal toothing (15) is corrected in accordance with the tilting behaviour of the tooth segment (5) under loading and can deviate slightly from the logarithmic spiral.

## Revendications

1. Transmission coaxiale, en particulier transmission à arbre creux pour la technique d'entraînement industrielle à haute densité de puissance, avec un élément d'entraînement (7), un élément (3) et un élément de sortie, une multiplication ainsi qu'une transmission d'un couple d'entraînement entre l'élément d'entraînement (7) et l'élément de sortie ayant lieu par l'intermédiaire d'une pluralité de segments dentés déplaçables radialement (5), **caractérisée par le fait qu'**un contour extérieur (11.1, 11.2) du flanc de dent (6) des segments dentés (5) et/ou un contour de flanc (12.1, 12.2) d'une denture (13) d'une denture intérieure (15) d'une roue creuse (1), par rapport à un axe de transmission (M), présentent un contour de dent qui permet un contact de surface dans la zone de venue en prise qui est obtenu par la réalisation en forme de spirale logarithmique.

2. Transmission coaxiale selon la revendication 1, **caractérisée par le fait que** le contour extérieur (11.1, 11.2) de la zone de flanc du segment denté (5) et le contour extérieur (12.1, 12,2) de la denture intérieure (15) de la denture (13) de la roue creuse (1) correspondent, indépendamment du rayon choisi par rapport à l'axe de transmission (M), à une spirale logarithmique commune (Ln) à angle de montée ($\alpha$) sélectionnable.

3. Transmission coaxiale selon la revendication 1 ou 2, **caractérisée par le fait qu'**il ne se produit, lors du mouvement de levage des segments dentés, pas d'écartement des flancs de dent (6) ainsi qu'une répartition de charge uniforme, étant donné que les dents sont déplacées le long de la spirale logarithmique (Ln) et que les flancs de dent (6) en contact l'un avec l'autre des segments dentés (5) et de la denture intérieure de roue creuse (15) possèdent toujours le même angle de montée (a).

4. Transmission coaxiale selon la revendication 1, **caractérisée par le fait que** l'angle ($\alpha$) peut être sélectionné entre 5° et 85°, en particulier entre 15° et 45°.

5. Transmission coaxiale selon au moins l'une des revendications 1 à 4, **caractérisée par le fait que** le contour extérieur de flanc de dent (11.1 ou 12.1) d'un côté du centre de l'axe (A) est réalisé symétrique par rapport au contour adjacent (11.2 ou 12.2) du flanc de dent (6) ou de la denture intérieure (15) de la roue creuse (1).

6. Transmission coaxiale selon au moins l'une des revendications 1 à 5, **caractérisée par le fait que** le segment denté (5) présente une courbure de tête (17).

7. Transmission coaxiale selon la revendication 6, **caractérisée par le fait que** la courbure de tête (17) du segment denté (5) s'appuie tangentiellement sur le flanc de dent (6) et se confond avec son contour de flanc de dent (11.1, 11.2).

8. Transmission coaxiale selon au moins l'une des revendications 1 à 7, **caractérisée par le fait qu'**il est prévu un arrondi de pied de roue creuse (16) entre les contours latéraux respectifs (12.1, 12.2) de la denture intérieure (15) de la roue creuse (1), l'arrondi de pied de roue creuse (16) étant moins courbé qu'une courbure de tête (17) du segment denté (5).

9. Transmission coaxiale selon au moins l'une des revendications 1 à 7, **caractérisée par le fait que** par suite de l'arrondi de roue creuse (16) de la denture intérieure (15) en contact avec la courbure de tête (17) du segment denté (5) est permis un mouvement de levage sans heurts et un mouvement de recul automatique des segments dentés (5) hors de la denture intérieure (15).

10. Transmission coaxiale selon au moins l'une des revendications 1 à 9, **caractérisée par le fait qu'**une adaptation du contour de flanc de dent (11.1, 11.2) du segment denté (5) a lieu à l'extérieur au contour (12.1, 12.2) de la denture intérieure (15) de la roue creuse (1) selon une spirale logarithmique sélectionnable (Ln) pendant l'engrenage du flanc de dent (6) dans un pied de dent (14) ou dans un contour de flanc de dent (12.1, 12.2) de la denture intérieure (15) de la roue creuse (1) et qu'un contact de surface entre le contour de flanc de dent (11.1, 11.2) du segment denté (5) et le flanc de dent (6) de la denture (13) de la roue creuse (1) est garanti.

11. Transmission coaxiale selon au moins l'une des revendications 2 à 10, **caractérisée par le fait que** le contour de flanc de dent (11) des segments dentés (5) et/ou le contour de flanc (12) de la denture intérieure (15) est corrigé selon le comportement de basculement du segment denté (5) sous charge et peut légèrement s'écarter de la spirale logarithmique.

Fig. 1

Fig. 2

Fig. 3

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- FR 755284
- DE 102006042786